# EUROPÄISCHE PATENTANMELDUNG

(11) **EP 1 972 303 A1**
(43) Veröffentlichungstag der Anmeldung: **24.09.2008**
(21) Anmeldenummer: 08153114.7
(22) Anmeldetag: 20.03.2008
(51) Int. Cl.: A61C 13/20, F27B 17/02

(54) **Vorrichtung zum Pressen eines dentalen Materials zur Herstellung eines Zahnersatzes oder Zahnteilersatzes**

(30) Priorität: 20.03.2007 DE 202007004265 U
(71) Anmelder: Wegold Edelmetalle AG, 90530 Wendelstein (DE)
(72) Erfinder: Freisleben, Jürgen, 91126, Schwabach (DE)
(74) Vertreter: Eisenführ, Speiser & Partner

(57) **Zusammenfassung**

Die Erfindung betrifft eine Vorrichtung zum Pressen eines dentalen Materials, insbesondere eines dentalen Kunststoffs, zur Herstellung eines Zahnersatzes oder Zahnteilersatzes mit einer Aufnahme mit einem Aufnahmeraum für eine Pressform mit einer Negativform des Zahnersatzes oder Zahnteilersatzes, insbesondere für eine Muffel; einer Presseinheit zum Einpressen des dentalen Materials in die Pressform, und einer Heizeinheit zum Beheizen des dentalen Materials während des Betriebs, wobei die Presseinheit einen pneumatischen Antrieb aufweist. Erfindungsgemäß ist ein Füllungssensor zur Erkennung einer vollständigen Füllung der Negativform vorgesehen, wobei der Füllungssensor insbesondere ein mit der Presseinheit gekoppelter Wegaufnehmer ist.

## Beschreibung

Die Erfindung betrifft eine Vorrichtung zum Pressen eines dentalen Materials, insbesondere eines dentalen Kunststoffs, zur Herstellung eines Zahnersatzes oder Zahnteilersatzes mit einem Aufnahmeraum für eine Pressform mit einer Negativform des Zahnersatzes oder Zahnteilersatzes, insbesondere für eine Muffel, einer Presseinheit zum Einpressen des dentalen Materials in die Pressform, und einer Heizeinheit zum Beheizen des dentalen Materials während des Betriebs.

Bei einem Einsatz einer Vorrichtung der eingangs genannten Art wird das dentale Material, vornehmlich in Form von Pellets, in die Pressform eingebracht, dort zu einem press- oder fließfähigen Zustand erwärmt und mit Hilfe der Presseinheit in die durch die Negativform vorgegebene Form gepresst.

Aufgabe der Erfindung ist es, eine Vorrichtung der eingangs genannten Art bereitzustellen, mit der in kontrollierter Weise ein Zahnersatz oder Zahnteilersatz in gewünschter und gleichmäßiger Qualität hergestellt werden kann.

Die Aufgabe wird durch eine Vorrichtung mit den Merkmalen gemäß Anspruch 1 oder Anspruch 2 gelöst.

Vorteilhafte Ausführungsformen der erfindungsgemäßen Vorrichtung weisen Merkmale auf, wie sie in den untergeordneten Ansprüchen definiert sind.

Das Vorsehen eines pneumatischen Antriebes erlaubt eine gezielte und kontrollierte Einstellung des von der Presseinheit auf das dentale Material ausgeübten Druckes, sodass sich insbesondere gewünschte Pressdruckverläufe während des Einpressens und/oder Abkühlens des dentalen Materials auf einfache Weise erreichen lassen.

Mit einer Vorrichtung, die dazu ausgestaltet ist, nach erfolgter Füllung der Pressform mit dentalem Material einen vorbestimmten Nachpressdruck auszuüben oder einen vorbestimmten Nachdruckpressverlauf zu durchlaufen, kann verhindert werden, dass sich in Folge einer beispielsweise durch das Abkühlen bedingten Kontraktion des dentalen Materials das dentale Material aus Teilen der zuvor vollständig gefüllten Negativform zurückzieht und damit eine unerwünschte Fehlpressung auftritt. Ein derartiges Zurückziehen kann besonders einfach bei noch fließfähigem dentalen Material vorkommen.

In einer vorteilhaften Ausführungsform weist die erfindungsgemäße Vorrichtung einen oder mehrere Pressstempel und/oder eine Pressplatte auf, wobei der oder die Pressstempel und/oder die Pressplatte lösbar und austauschbar mit der Presseinheit verbunden sind. Auf diese Weise ergibt sich eine erhöhte Flexibilität der Vorrichtung, sodass wahlweise eine einzelne Negativform oder eine Gruppe von zwei oder mehr Negativformen mit einer entsprechenden Menge dentalen Materials, beispielsweise in Form einer Anzahl von Pellets, gefüllt werden kann.

Gemäß einer anderen vorteilhaften Ausführungsform ist ein Dichtungselement vorgesehen, das zwischen dem Pressstempel und dem dentalen Material angeordnet werden kann, wobei dieser Pressstempel vorzugsweise aus einem feuerfesten Material besteht. Mit dem Dichtungselement kann ein Ausweichen des dentalen Materials während des Pressen am Pressstempel vorbei vermieden oder zumindest verringert werden. Dies erlaubt insbesondere, die zu Beginn des Pressvorgangs vorgesehene Menge an dentalem Material besser an den Materialbedarf zur Füllung der Negativform anzupassen, da ein ansonsten auftretender Verlust an dentalem Material um den Pressstempel herum reduziert wird. Hinzu kommt, dass die mit einem ausgetretenen dentalen Material verbundenen Probleme, wie beispielsweise ein erschwertes Entfernen des Pressstempels nach erfolgter Herstellung das Zahnersatzes oder Zahnteilersatzes, vermieden oder verringert werden. Bevorzugt umfasst das Dichtungselement Glasfasern und/oder Keramikfasern, insbesondere in Form einer Matte mit gesponnenen Fasern.

Gemäß einer besonders bevorzugten Ausführungsform weist die Aufnahme einen in den Aufnahmeraum vorstehenden Temperatursensor auf, der bei in die Aufnahme eingesetzter Pressform in eine Ausnehmung der Pressform ragt, insbesondere in der Nähe der Negativform. Mit einer Temperaturmessung, wie sie herkömmlich etwa im Bereich der Heizeinheit stattfindet, lässt sich die Temperatur im Bereich der Negativform beziehungsweise die Temperatur des dentalen Materials nicht exakt bestimmen, sondern nur anhand von Erfahrungswerten abschätzten. Mit einem Temperatursensor, der die Temperatur im Inneren der Pressform, insbesondere in der Nähe der Negativform, aufnehmen kann, kann die für den Pressvorgang relevante Temperatur jedoch genauer bestimmt werden, sodass auf eine Schätzung weitestgehend verzichtet werden kann. Dies erlaubt, eine breite Palette von unterschiedlichen Pressformen einzusetzen, ohne das aufwändige Versuche nötig wären, um eine Beziehung zwischen der Temperatur des Heizelementes und der Temperatur der Negativform beziehungsweise des dentalen Materials als Basis für eine Schätzung festzustellen. Eine möglichst genaue Kenntnis der aktuellen Temperatur ist insbesondere für die Bestimmung des geeigneten Zeitpunktes zum Einleiten des Pressvorgangs und zum Beenden eines Nachpressens von Vorteil.

Gemäß einer weiteren vorteilhaften Ausführungsform der vorliegenden Erfindung schließt die Heizeinheit den Aufnahmeraum in einem Heizbetrieb zumindest teilweise ein und ist zu einem Abkühlvorgang vom Aufnahmeraum entfernbar, insbesondere ist die Heizeinheit koaxial zur Pressachse angeordnet und entlang der Pressachse verfahrbar, um den Aufnahmeraum einzuschließen beziehungsweise vom Aufnahmeraum entfernt zu werden. Auf diese Weise kann das Heizelement als Wärmequelle um die Pressform herum angeordnet werden, sodass vor und während eines Pressvorgangs der Pressform und damit dem dentalen Material Wärme zugeführt werden kann. Zur Beschleunigung eines Abkühlvorganges kann die Heizeinheit vom Aufnahmeraum entfernt werden, sodass die Pressform beispielsweise einer erzwungenen Kühlung ausgesetzt werden kann. Neben dem Vorteil einer schnelleren Abkühlung wird damit vermieden, dass beim Abkühlen der Pressform beziehungsweise des dentalen Materials auch die Heizeinheit abgekühlt wird, was den Energiebedarf zum Aufheizen für einen späteren Pressvorgang vermindert.

Weitere bevorzugte Ausgestaltungen sind in den Unteransprüchen angegeben.

Die Erfindung wird im Folgenden anhand eines Ausführungsbeispieles mit Bezug auf die beiliegenden Figuren näher erläutert. Hierbei ist:
- Fig. 1: einer erfindungsgemäßen Vorrichtung während eines Vorwärmvorgangs,
- Fig. 2: eine Darstellung einer erfindungsgemäßen Vorrichtung mit aus dem Bereich des Aufnahmeraums verfahrener Heizeinheit und mit eingeführtem dentalen Material,
- Fig. 3: eine Darstellung einer erfindungsgemäßen Vorrichtung mit aus dem Bereich des Aufnahmeraums verfahrener Heizeinheit während eines Nachpressvorgangs, und
- Fig. 4: eine vergrößerte Darstellung eines Bereiches einer erfindungsgemäßen Vorrichtung.

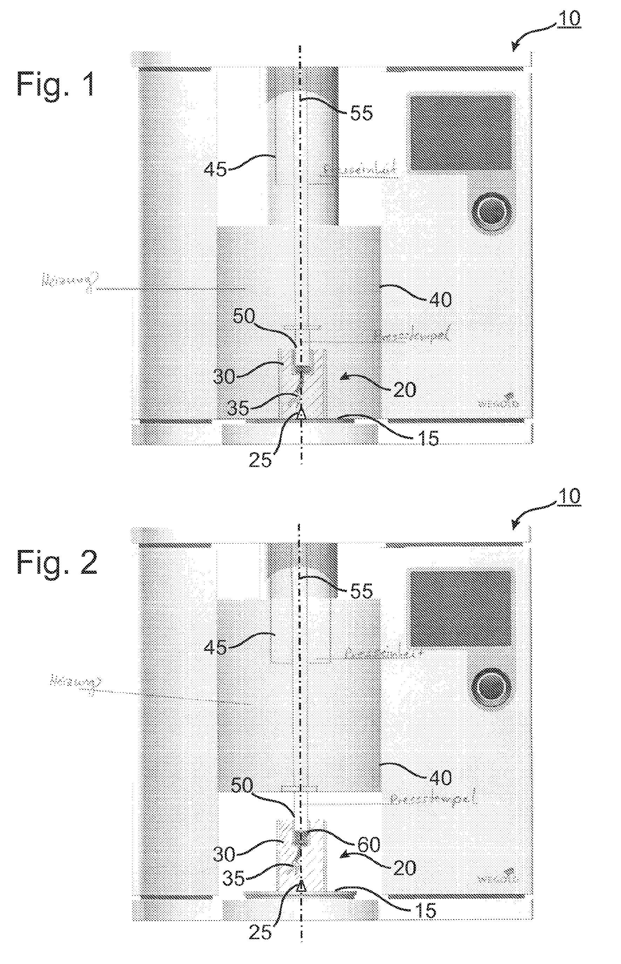

Fig. 1 zeigt eine Vorrichtung gemäß einem Ausführungsbeispiels der vorliegenden Erfindung. Die Vorrichtung 10 weist eine Aufnahme 15 mit einem Aufnahmeraum 20 und einem Temperatursensor 25 auf. In dem Aufnahmeraum 20 befindet sich eine Pressform 30 in Form einer Muffel mit einer Negativform 35, die die äußere Form des zu erzeugenden Zahnersatzes beziehungsweise Zahnteilersatzes vorgibt. In der Darstellung von Fig. 1 umschließt eine Heizeinheit 40 der Vorrichtung den Aufnahmeraum 20. Konzentrisch mit der Heizeinheit 40 ist im Bereich oberhalb des Aufnahmeraumes 20 eine Presseinheit 45 angeordnet, die einen Pressstempel 50 aufweist, der in die Pressform 30 hineinragt. Der Pressstempel 50 ist lösbar mit Presseinheit 45 verbunden und so angeordnet, dass von der Presseinheit 45 über den Pressstempel 50 entlang einer Pressachse 55 Druck in einem mit der Negativform 35 verbundenen Hohlbereich der Pressform 30 ausgeübt werden kann.

Gemäß einem Verfahren zur Anwendung dieser erfindungsgemäßen Vorrichtung wird die Muffel 30 über Nacht bei einer Temperatur von 550°C bis 700°C ausgeheizt und langsam auf etwa 370°C abgekühlt, bevor sie in den Aufnahmeraum 20 eingestellt wird. In dem Aufnahmeraum 20 erfolgt eine Kühlung auf etwa 270°C, bevor die Muffel 30 mit einem oder mehreren Pellets aus dem dentalen Material, hier ein dentaler Kunststoff, bestückt wird.

Fig. 2 zeigt die erfindungsgemäße Vorrichtung 10 aus Fig. 1 mit gegenüber dem Aufnahmeraum 20 entlang der Pressachse 55 verfahrener Heizeinheit 40, so dass die Pressform 30 teilweise freiliegt. Hierbei kann, bei entsprechend verfahrenem Pressstempel 50, die Pressform 30, wie oben beschrieben, mit dentalem Material 60 bestückt werden.

Sobald mit Hilfe des Sensors 25 eine Temperatur im Bereich der Negativform 35 beziehungsweise eine Temperatur des dentalen Materials 60 festgestellt wird, die einer gewünschten Starttemperatur für einen Pressvorgang entspricht, wird der Pressvorgang in an sich bekannter Weise durchgeführt. Die zum Pressen nötige Kraft wird von der pneumatischen Presseinheit 45 über den Pressstempel 50 auf das dentale Material 60 ausgeübt. Die Anordnung der Heizeinheit 40 entspricht hierbei der in Fig. 1 dargestellten Position, bei der gegebenenfalls der Aufnahmeraum 20 gasdicht abgeschlossen werden kann. Bei gasdicht abgeschlossenem Aufnahmeraum 20 kann eine gewünschte Atmosphäre mit vorbestimmter Gaszusammensetzung und vorbestimmtem Unter- beziehungsweise Überdruck eingestellt werden.

Im vorliegenden Ausführungsbeispiel erfolgt das Pressen von oben. Eine andere Anordnung der Presseinheit ist allerdings ebenfalls möglich, was ein Pressen von unten oder von beiden Seiten umfasst. Der Pressstempel bzw. die Pressplatte kann ortfest angebracht sein, während mit der Aufnahme die Pressform gegen den Stempel bzw. die Platte gedrückt wird. Bei geeigneter Anordnung kann auch durch die Aufnahme hindurch gepresst werden.

Sobald von einem Füllungssensor (nicht dargestellt) in Form eines mit der Presseinheit gekoppelten Wegaufnehmers festgestellt wird, dass die Negativform 35 vollständig mit dentalem Material 60 gefüllt ist, also in einem vorbestimmten Zeitintervall der Pressstempel entweder gar nicht oder nur um weniger als eine bestimmte Grenzstrecke bewegt wird, schließt sich ein Nachpressvorgang an.

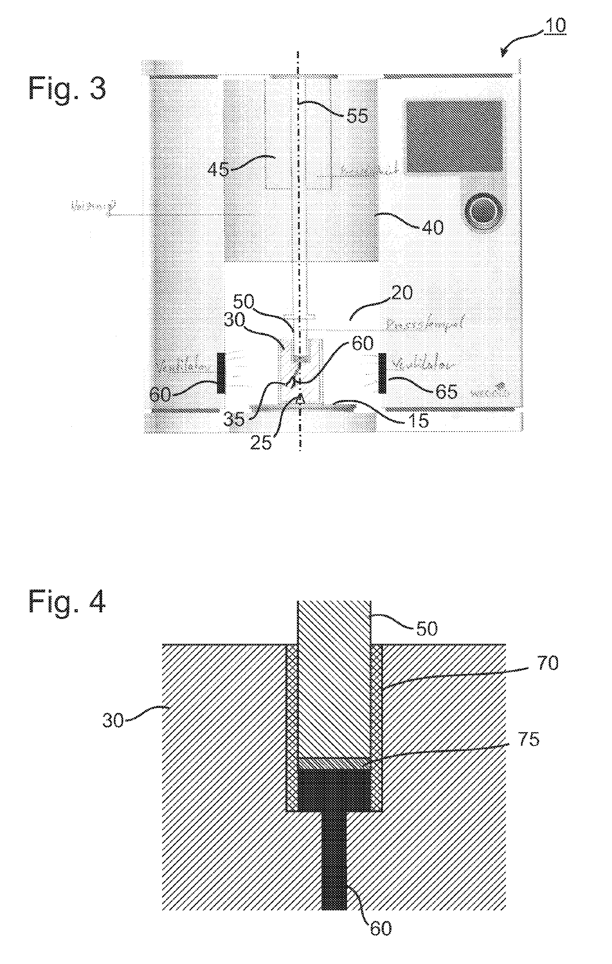

Fig. 3 zeigt die erfindungsgemäße Vorrichtung der Fig. 1 und 2 während eines Nachpressvorganges. Der Pressstempel 50 wird durch die Presseinheit 45 nach vollständiger Füllung der Negativform 35 mit dentalem Material 60 weiterhin eingepresst, sodass auch nach der vollständigen Füllung noch ein vorbestimmter Nachpressdruck ausgeübt wird. Hierbei ist die Heizeinheit 40 aus dem Bereich des Aufnahmeraumes 20 verfahren, so dass in der Nähe des Aufnahmeraumes 20 angeordnete Lüfterelemente 65 die Pressform 30 mit einem Luftstrom beaufschlagen können, um eine Abkühlung der Pressform und damit des dentalen Materials 60 zu beschleunigen. In dem dargestellten Ausführungsbeispiel ist die Vorrichtung ausgestaltet, um zumindest bis zur Erstarrungstemperatur des dentalen Materials 60, dessen jeweilige Temperatur mittels des Sensors 25 aufgenommen werden kann, einen Nachpressdruck aufrechtzuerhalten, der dem Pressdruck während des Pressvorganges entspricht. Alternativ kann der Nachpressdruck auf für einen vorbestimmten Zeitraum, ggf. unabhängig von der Temperatur des dentalen Materials, aufrechterhalten werden, beispielsweise für 2 Minuten.

Fig. 4 zeigt eine vergrößerte Darstellung eines Bereiches einer erfindungsgemäßen Vorrichtung mit einer Muffel 30 mit einer Führungshilfe 70, in die ein Pressstempel 50 mit einem Dichtungselement 75 eingebracht ist. Die Führungshilfe 70 und der Pressstempel 50 bestehen aus Aluminiumoxidkeramik, während das Dichtungselement 75 mit einem geeigneten Klebstoff auf der Pressfläche des Pressstempels fixiert ist und aus einer temperaturbeständigen Glasfasermatte besteht.

## Patentansprüche

1. Vorrichtung zum Pressen eines dentalen Materials, insbesondere eines dentalen Kunststoffs, zur Herstellung eines Zahnersatzes oder Zahnteilersatzes mit:
- einer Aufnahme mit einem Aufnahmeraum für eine Pressform mit einer Negativform des Zahnersatzes oder Zahnteilersatzes, insbesondere für eine Muffel,
- einer Presseinheit zum Einpressen des dentalen Materials in die Pressform, und
- einer Heizeinheit zum Beheizen des dentalen Materials während des Betriebs,
wobei die Presseinheit einen pneumatischen Antrieb aufweist,
**dadurch gekennzeichnet, dass** ein Füllungssensor zur Erkennung einer vollständigen Füllung der Negativform vorgesehen ist, wobei der Füllungssensor insbesondere ein mit der Presseinheit gekoppelter Wegaufnehmer ist.

2. Vorrichtung nach Anspruch 1,
**dadurch gekennzeichnet, dass**
die Presseinheit mit einer Steuereinheit gekoppelt ist, die die Presseinheit steuert, so dass während eines Abkühlvorgangs nach erfolgter Füllung der Pressform mit dentalem Material bis zu einer vorgegebenen Grenztemperatur oder für einen vorbestimmten Zeitraum ein vorbestimmter Nachpressdruck ausgeübt oder einen vorbestimmten Nachdruckpressverlauf zu durchlaufen wird.

3. Vorrichtung mit den Merkmalen von Anspruch 1 und Anspruch 2.

4. Vorrichtung nach einem der vorstehenden Ansprüche,
**dadurch gekennzeichnet, dass** die Presseinheit zum Einpressen entlang einer Pressachse ausgestaltet ist.

5. Vorrichtung nach einem der vorstehenden Ansprüche,
**dadurch gekennzeichnet, dass** die Presseinheit ausgestaltet ist, um während eines Pressvorgangs einen vorbestimmten Pressdruck auszuüben oder einen vorbestimmten Pressdruckverlauf zu durchlaufen.

6. Vorrichtung nach einem der vorstehenden Ansprüche,
**dadurch gekennzeichnet, dass** die Presseinheit zum Ausüben eines Druckes von bis zu 5 bar ausgestaltet ist.

7. Vorrichtung nach einem der vorstehenden Ansprüche,
**dadurch gekennzeichnet, dass** die Presseinheit zum Ausüben einer Kraft von bis zu 750 N ausgestaltet ist.

8. Vorrichtung nach einem der vorstehenden Ansprüche,
**dadurch gekennzeichnet, dass** die Presseinheit einen oder mehrere Pressstempel und/oder eine Pressplatte aufweist, wobei der oder die Pressstempel und/oder die Pressplatte lösbar und austauschbar mit der Presseinheit verbunden sind.

9. Vorrichtung nach Anspruch 7,
**dadurch gekennzeichnet, dass** der oder die Pressstempel aus einem Keramikmaterial, insbesondere Aluminiumoxid, hergestellt sind.

10. Vorrichtung nach einem der vorstehenden Ansprüche,
ferner mit einer in einem Presskanal der Pressform anzuordnenden Führungshilfe, wobei die Führungshilfe insbesondere aus dem Material des Pressstempels hergestellt ist.

11. Vorrichtung nach einem der vorstehenden Ansprüche,
ferner mit einem zwischen dem Pressstempel und dem dentalen Material anzuordnenden Dichtungselement, insbesondere hergestellt aus einem feuerfesten Material, vorzugsweise aus Glasfasern und/oder Keramikfasern, besonders bevorzugt in Form einer Matte mit gesponnenen Fasern.

12. Vorrichtung nach einem der vorstehenden Ansprüche,
**dadurch gekennzeichnet, dass** der Nachpressdruck dem Pressdruck während des Pressvorgangs entspricht.

13. Vorrichtung nach einem der vorstehenden Ansprüche,
**dadurch gekennzeichnet, dass** die Presseinheit ausgestaltet ist, um bei Erreichen einer vorgegebenen Starttemperatur des dentalen Materials den Pressvorgang einzuleiten.

14. Vorrichtung nach einem der vorstehenden Ansprüche,
**dadurch gekennzeichnet, dass** der Aufnahmeraum gasdicht verschließbar ist und die Vorrichtung ferner eine Vakuumeinheit zur Erzeugung eines vorbestimmten Unterdrucks im Aufnahmeraum und/oder eine Gaseinheit durch Erzeugung einer vorbestimmten Gasatmosphäre im Aufnahmeraum aufweist.

15. Vorrichtung nach einem der vorstehenden Ansprüche,
**dadurch gekennzeichnet, dass** die Aufnahme einen in den Aufnahmeraum vorstehenden Temperatursensor aufweist, der bei in die Aufnahme eingesetzter Pressform in eine Ausnehmung der Pressform, insbesondere in der Nähe der Negativform, ragt.

16. Vorrichtung nach Anspruch 15,
**dadurch gekennzeichnet, dass** der Temperatursensor eine Form aufweist, die radialsymmetrisch um eine zur Pressachse parallele Achse ist, insbesondere die Form eines Kegelstumpfes, und wobei der Temperatursensor mittig zu dem Aufnahmeraum angeordnet ist.

17. Vorrichtung nach einem der vorstehenden Ansprüche,
**dadurch gekennzeichnet, dass** die Heizeinheit ausgestaltet ist, um im Betrieb eine vorbestimmte Temperatur oder einen vorbestimmten Temperaturverlauf der Pressform und/oder des dentalen Materials einzustellen.

18. Vorrichtung nach einem der vorstehenden Ansprüche,
**dadurch gekennzeichnet, dass** die Heizeinheit in einem Heizbetrieb den Aufnahmeraum zumindest teilweise einschließt und zu einem Abkühlvorgang vom Aufnahmeraum entfernbar ist.

19. Vorrichtung nach Anspruch 18,
**dadurch gekennzeichnet, dass** die Heizeinheit koaxial zur Pressachse angeordnet und entlang der Pressachse verfahrbar ist, um den Aufnahmeraum einzuschließen bzw. vom Aufnahmeraum entfernt zu werden.

20. Vorrichtung nach einem der vorstehenden Ansprüche,
ferner mit einem Lüfterelement, das ausgestaltet ist, um bei vom Aufnahmeraum entfernter Heizeinheit während des Abkühlvorgangs die Pressform mit einem Gasstrom zu beaufschlagen, insbesondere mit einem Luftstrom.

21. Vorrichtung nach einem der vorstehenden Ansprüche,
**dadurch gekennzeichnet, dass** die Heizeinheit zum Einstellen einer Temperatur von bis zu 600°C ausgestaltet ist, wobei die Starttemperatur insbesondere im Bereich von 300°C bis 450°C liegt, vorzugsweise im Bereich von 350°C bis 400°C, und wobei die Temperatur während des Pressvorgangs insbesondere unterhalb der Starttemperatur und im Bereich von 250°C bis 350°C liegt.

22. Vorrichtung nach einem der Ansprüche 2 bis 21,
**dadurch gekennzeichnet, dass** die Grenztemperatur eine Erstarrungstemperatur des dentalen Materials ist.
